# EUROPÄISCHE PATENTSCHRIFT

(11) **EP 1 063 138 B1**
(45) Veröffentlichungstag und Bekanntmachung des Hinweises auf die Patenterteilung: **18.02.2004**
(21) Anmeldenummer: 00112748.9
(22) Anmeldetag: 16.06.2000
(51) Int. Cl.: B60T 13/26, B60T 13/68, B60T 7/10, B60T 13/74, B60T 7/04, F16D 65/21, B60T 13/38

(54) **Verfahren und Vorrichtung zur Kontrolle der Wirkung der Feststellbremse einer Scheibenbremsanlage eines Nutzfahrzeuges**
Efficiency control method and device for the parking brake of a disc brake system of an industrial vehicle
Méthode et dispositif de contrôle d'efficacité pour frein de stationnement d'un système de freinage à disque d'un véhicule utilitaire

(30) Priorität: 25.06.1999 DE 19929220
(43) Veröffentlichungstag der Anmeldung: 27.12.2000
(73) Patentinhaber: MAN Nutzfahrzeuge Aktiengesellschaft, 80976 München (DE)
(72) Erfinder: Modlmayr, Johann, Dipl.-Ing., 86529 Schrobenhausen (DE); Krenner, Manfred, Dipl.-Ing., 80997 München (DE)

(56) Entgegenhaltungen:
- EP-A- 0 718 168
- EP-A- 0 866 236
- DE-A- 3 020 821
- DE-A- 3 518 715
- DE-A- 3 705 911
- DE-U- 6 604 967

## Beschreibung

Bei Nutzfahrzeugen ist ein sehr hohes Gesamtgewicht möglich. Die Bremsen von Nutzfahrzeugen werden deshalb besonders beansprucht.

Deshalb ist als Zweitbremse die Motorbremse bei allen Lastwagen installiert. Zusätzlich sind bei Fernverkehrslastwagen oft Retarder eingebaut.

In Lastkraftwagen werden immer häufiger Scheibenbremsen eingebaut, an denen auch die Feststellbremse ist.

Wenn ein Lastkraftwagen mit Trommelbremsen abgestellt wird und man davon ausgeht, daß die Bremstrommeln warm bis heiß sind, verstärkt sich nach den Einlegen der Feststellbremse die Bremswirkung der Trommelbremsen, da sich die Bremstrommeln beim Abkühlen zusammenziehen, im Durchmesser also kleiner werden.

Die Wirkung beim Abkühlen einer Feststellbremse an einer Scheibenbremse ist dagegen genau umgekehrt. Dadurch, daß sich die Bremsscheibe und die Bremsbeläge durch das Abkühlen auch in der Dicke verringern, läßt die Bremswirkung der Feststellbremse nach, da, ausgehend von der Federkraft des Federspeicherbremszylinders, die Nachstellkraft um die Haftreibungskraft der gesamten Zuspanneinrichtung (Hysterese) verringert wird.

Wenn nun der z. B. vollbeladene Lastkraftwagen im Gefälle mit heißen Bremsen abgestellt wird, kann es nach einer bestimmten Zeit zum Wegrollen des Fahrzeuges führen.

Aufgabe der Erfindung ist es, dem Fahrzeugführer vor Verlassen seines Arbeitsplatzes erkennbar zu machen, ob die Wirkung der Feststellbremse seines Fahrzeuges im abgestellten Gefälle ausreichend ist oder nicht.

Die Aufgabe wird erfindungsgemäß durch die Merkmale des Verfahrens nach Anspruch 1 und die der Vorrichtung nach Anspruch 2 gelöst.

Dadurch, daß beim Einlegen der Feststellbremse der Druck der Druckluft im Feststellbremskreis nicht gleich auf atmosphärischen Druck abgelassen wird, sondern ein Restdruck im Feststellbremskreis bleibt, dadurch also nicht die maximal mögliche Feststellbremswirkung erreicht wird, kann der Fahrzeugführer vor Verlassen seines Arbeitsplatzes erkennen, ob sein Fahrzeug wegrollt oder nicht. Wenn es wegrollt, wird er es in einem flacheren Gefälle abstellen. Rollt es nicht weg, so wird die Feststellbremswirkung, auch nachdem der Fahrzeugführer sein Fahrzeug verlassen hat, nicht nachlassen und das Fahrzeug nicht wegrollen, da sich die maximal mögliche Bremswirkung durch den langsamen Abbau des Restdruckes in der Feststellbremsanlage langsam weiter aufbaut. Der Restdruck im Feststellbremskreis von etwa 1 bar Überdruck wird langsam abgebaut. Der Restdruck bewirkt, daß die Federspeicherbremszylinder nicht voll wirken können. Damit wird der kritische Zustand schon vor dem Abkühlen der Bremsscheiben simuliert.

Der zunächst schnelle und dann langsame Abbau der Druckluft im Feststellbremskreis kann durch ein abgeändertes Relaisventil dargestellt werden, das bei Betätigung der Handbremse über ein Ventil bis auf einen Restdruck schnell und dann, wenn das Ventil schließt, über eine Drossel langsam Druckluft ins Freie bzw. über einen Schalldämpfer ins Freie abbläst. Die Zeit für das Abblasen über die Drossel kann zwischen 5 Sekunden bis etwa 30 Minuten, vorzugsweise 1 Minute dauern.

In der Zeichnung ist ein Ausführungsbeispiel der Erfindung schematisch dargestellt.

Es zeigt:
- Fig. 1: die Feststellbremsanlage,
- Fig. 2: das abgeänderte Relaisventil,
- Fig. 3: ein Diagramm über den Druckabbau der Druckluft,
- Fig. 4: ein Diagramm über den Zuspannkraftaufbau der Feststellbremse.

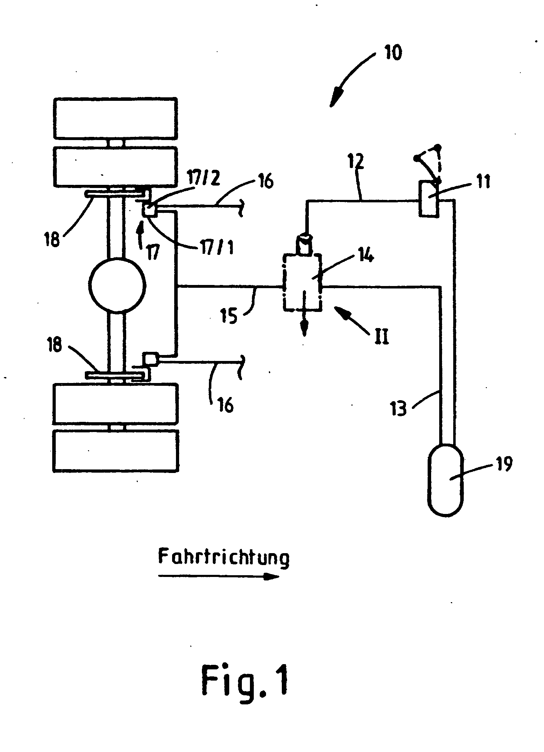

Die Fig. 1 zeigt eine Feststellbremsanlage 10 mit Scheibenbremsen 17, 18 an der Hinterachse eines Nutzfahrzeuges. Mit dem Handbremsventil 11 wird über die Steuerleitung 12 das Relaisventil 14 gesteuert, das die anstehende Druckluft aus der Zuführungsleitung 13 druckgeregelt in den Feststellbremskreis 15 führt. Der Bremszylinder 17 ist im Normalfall ein Tristopzylinder 17, mit dem, unabhängig voneinander, sowohl die Betriebsbremse 17/1 über die Bremskreisleitung 16, als auch die Feststellbremse 17/2 über den Bremskreis 15, betätigbar ist. Der Tristopzylinder 17 ist ein Federspeicherbremszylinder für die Feststellbremse 17/2 und ein vorgebauter Membranzylinder 17/1 für die Betriebsbremse. Für den Federspeicherbremszylinder sind etwa 6 bar Überdruck erforderlich, damit die Feststellbemse 17/2 sich löst. Wenn im Feststellbremskreis 15 atmosphärischer Druck ist, spannt der Feststellbremszylinder mit seiner Federkraft die Bremsklötze.

Erfindungsgemäß wird beim Einlegen der Feststellbremse 17/2 über das Handbremsventil 11 nur bis zu einem Restdruck 32 von etwa 1 bar Überdruck über das Relaisventil 14 schnell entspannt und dann bis zum atmosphärischen Druck 33 langsam entspannt. Dadurch wird im Moment des Abstellens ein nicht voll wirkendes Bremsmoment erreicht, das die Sicherheitsreserve gegen Wegrollen des Fahrzeuges für die im Anschluß durch Abkühlung auch in der Dicke schrumpfende Bremsscheibe 18 und der Bremsbeläge ist.

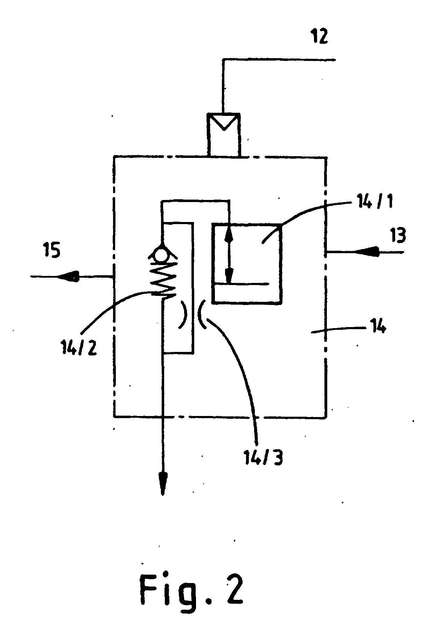

Die Fig. 2 zeigt das erfindungsgemäß modifizierte Relaisventil 14. Dem Auslaßventil 14/1 für den Auslaß der Druckluft in die Atmosphäre ist ein Ventil 14/2 nachgeschaltet, über das die Druckluft im Feststellbremskreis 15 bis auf einen Restdruck von etwa 1 bar Überdruck schnell und dann über die Drossel 14/3 der Restdruck bis auf den atmosphärischen Druck langsam abgelassen wird. Die Zeit für das Ablassen des Restdruckes sollte einstellbar, vorzugsweise sollte sie etwa 1 Minute sein.

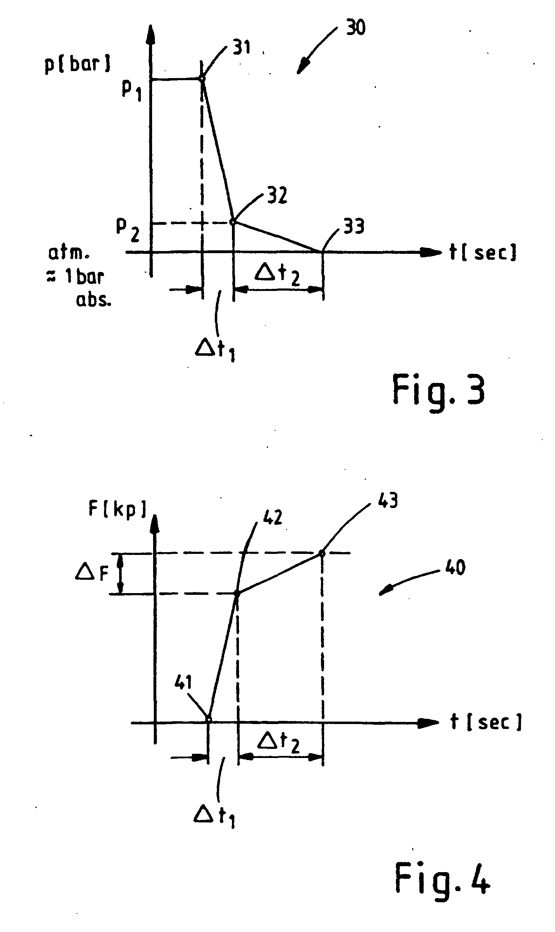

Die Fig. 3 zeigt den Druckverlauf 31, 32, 33 der Druckluft im Feststellbremskreis 15. Die waagrechte Linie bis zum Punkt 31 ist der Druck p₁, der zum Öffnen der Feststellbremse 17/2 erforderlich ist. Wenn die Feststellbremse 17/2 eingelegt ist, fällt der Druck schnell in der Zeit Δt₁ auf einen Druck p₂ und dann langsam in der Zeit Δt₂ auf atmosphärischen Druck.

Die Fig. 4 zeigt die Zuspannkraft F des z. B. Tristopzylinders 17. Bei druckbeaufschlagtem Feststellbremskreis 15 ist die Zuspannkraft 0. Wenn die Feststellbremse 17/2 betätigt wird, steigt die Zuspannkraft F vom Punkt 41 schnell, in der Zeit Δt₁, auf den Punkt 42. Die Restzuspannkraft ΔF wird dann langsam über die Zeit Δt₂ aufgebaut, bis zum Punkt 43.

## Patentansprüche

1. Verfahren zur Kontrolle der Feststellbremswirkung an einer Feststellbremse mit Scheibenbremsen einer Druckluftbremsanlage eines Nutzfahrzeuges, mit einem Handbremsventil und einem Handbremshebel zum Betätigen der Feststellbremse, mit einem Relaisventil zum Befüllen mit oder Ablassen von Druckluft des Feststellbremskreises, mit je einem Federspeicherbremszylinder, der ab einem bestimmten Druck der Druckluft die Feststellbremse öffnet, **dadurch gekennzeichnet, daß** beim Einlegen der Feststellbremse die Druckluft aus dem Feststellbremskreis (15) zunächst schnell auf einen Restdruck (32) von etwa 1 bar Überdruck und dann langsam (Δt₂) auf atmosphärischen Druck abgelassen wird.

2. Vorrichtung zur Kontrolle der Feststellbremswirkung an einer Feststellachse mit Scheibenbremsen einer Druckluftbremsanlage eines Nutzfahrzeuges, mit einem Handbremsventil und einem Handbremshebel zum Betätigen der Feststellbremse, mit einem Relaisventil zum Befüllen mit oder Ablassen von Druckluft des Feststellbremskreises, mit je einem Federspeicherbremszylinder, der ab einem bestimmten Druck der Druckluft die Feststellbremse öffnet, **dadurch gekennzeichnet, daß** im Relaisventil (14) nach dem Abblaseventil (14/1) ein Ventil (14/2) und parallel dazu ein Drosselventil (14/3) vorgesehen ist.

3. Vorrichtung nach Anspruch 2, **dadurch gekennzeichnet, daß** die Zeit (Δt₂) des Ablassens des Restdruckes im Bereich von etwa 5 Sekunden bis 30 Minuten, vorzugsweise 1 Minute beträgt.

## Claims

1. Procedure for controlling the braking effect of a parking brake with disc brakes belonging to a compressed-air brake system in a commercial vehicle, with a hand brake valve and a hand brake lever for actuating the parking brake, with a relay valve for filling the parking brake circuit with compressed air or letting compressed air escape from said parking brake circuit, with a spring-loaded brake cylinder for each disc brake, which spring-loaded brake cylinder opens the parking brake from a certain compressed-air pressure onwards, **characterised in that** when the parking brake is applied the air pressure in the parking brake circuit (15) is first quickly reduced to a residual overpressure (32) of approximately 1 bar and then slowly (Δt₂) reduced to atmospheric pressure.

2. Device for controlling the braking effect of a parking brake on an axle with parking brake provided with disc brakes belonging to a compressed-air brake system in a commercial vehicle, with a hand brake valve and a hand brake lever for actuating the parking brake, with a relay valve for filling the parking brake circuit with compressed air or letting compressed air escape from said parking brake circuit, with a spring-loaded brake cylinder for each disc brake, which spring-loaded brake cylinder opens the parking brake from a certain compressed-air pressure onwards, **characterised in that** in the relay valve (14) downstream of the blow-off valve (14/1) a valve (14/2) and, parallel to it, a constriction valve (14/3) are provided.

3. Device according to Claim 2, **characterised in that** the time (Δt₂) for letting the residual pressure escape is in the range of some 5 seconds to 30 minutes, preferably 1 minute.

## Revendications

1. Procédé de contrôle de l'effet de freinage du frein d'immobilisation sur un frein d'immobilisation avec freins à disque raccordés à un circuit de freinage à air comprimé d'un véhicule industriel, équipé d'une valve de frein à main et d'un levier de frein à main pour actionner le frein d'immobilisation, d'une valve-relais pour remplir d'air comprimé ou purger le circuit du frein d'immobilisation, d'un cylindre de frein à ressort accumulateur de chaque côté qui ouvre le frein d'immobilisation à partir d'une certaine pression de l'air comprimé, **caractérisé par le fait qu'**en enclenchant le frein d'immobilisation, l'air comprimé est purgé hors du circuit du frein d'immobilisation (15) tout d'abord rapidement jusqu'à une pression résiduelle (32) d'environ 1 bar de surpression, puis lentement (Δt₂) jusqu'à une pression égale à la pression atmosphérique.

2. Dispositif de contrôle de l'effet de freinage du frein d'immobilisation sur un essieu à immobiliser avec freins à disque raccordés à un circuit de freinage à air comprimé d'un véhicule industriel, équipé d'une valve d'un frein à main et d'un levier de frein à main pour actionner le frein d'immobilisation, d'une valve-relais pour remplir d'air comprimé ou purger le circuit du frein d'immobilisation, d'un cylindre de frein à ressort accumulateur de chaque côté qui ouvre le frein d'immobilisation à partir d'une certaine pression d'air comprimé, **caractérisé par le fait qu'**une valve (14/2) et, parallèle à elle, une valve à étranglement sont prévues dans la valve-relais (14) en aval de la valve de purge (14/1).

3. Dispositif selon la revendication 2, **caractérisé par le fait que** le temps (Δt₂) de purge de la pression résiduelle se situe dans la plage d'environ 5 secondes à 30 minutes, mais s'élève de préférence à 1 minute.
